# EUROPEAN PATENT APPLICATION

(11) **EP 4 647 189 A1**
(43) Date of publication of application: **12.11.2025**
(21) Application number: 24774659.7
(22) Date of filing: 05.03.2024
(51) Int. Cl.: B21D 22/00, G06F 30/23, G06F 113/22

(54) **RUPTURE DETERMINING METHOD, DEVICE, AND PROGRAM FOR PRESS MOLDING ANALYSIS, AND METHOD FOR PRODUCING PRESS-MOLDED PRODUCT**

(30) Priority: 23.03.2023 JP 2023046173
(71) Applicant: JFE Steel Corporation, Tokyo 100-0011 (JP); Toyoda Iron Works Co., Ltd., Toyota-shi Aichi 471-8507 (JP)
(72) Inventor: KISHIGAMI, Yasuhiro, Tokyo 100-0011 (JP); KOSAKA, Hiroyasu, Toyota-shi, Aichi 471-8507 (JP); ISHINO, Yasunobu, Toyota-shi, Aichi 471-8507 (JP)
(74) Representative: Grünecker Patent- und Rechtsanwälte PartG mbB
(86) International application number: PCT/JP2024/008267
(87) International publication number: WO 2024/195516

(57) **Abstract**

A fracture determination method in a press forming analysis according to the present invention determines a fracture of a blank in the press forming analysis on the basis of a forming limit diagram, and includes: measuring a distance between each of shell elements of the blank and each of an upper die and a lower die at a tool position where fracture determination is performed (S1); setting a shorter one of the distances to the upper die and the lower die as a tool distance of each of the shell elements (S3); determining that the shell element in which the tool distance is 1/2 or less of a sheet thickness is in contact with the tool (S5); and determining presence or absence of the fracture for each of the shell elements by using the forming limit diagram acquired by the Nakajima test for the shell element determined to be in contact with the tool and using the forming limit diagram acquired by the Marciniak test for the shell element not determined to be in contact with the tool (S7).

## Description

### Field

The present invention relates to a fracture determination method, device, and program in a press forming analysis of determining, on the basis of a forming limit diagram/forming limit curve, a fracture of a blank in the press forming analysis in a process of press forming the blank. Furthermore, the present invention relates to a press formed part manufacturing method of determining a press forming condition in such a manner as to control a fracture of a blank on the basis of a result of determining presence or absence of the fracture of the blank in press forming, and manufacturing a press formed part.

### Background

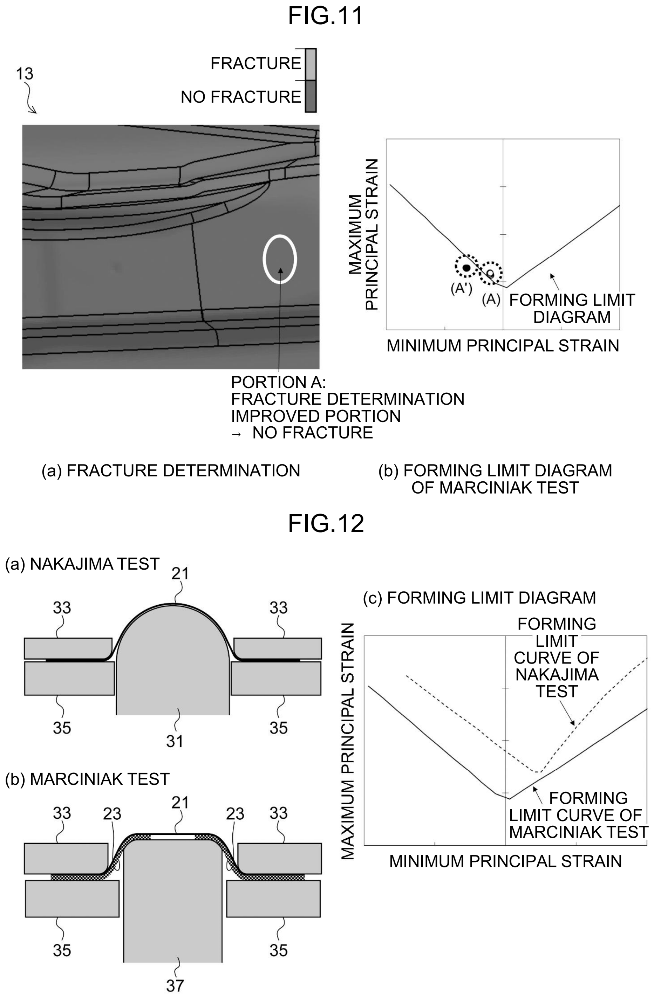

Application of a high tensile strength steel sheet in an automotive body is expanded due to an increasing need for improvement of fuel efficiency by weight reduction of an automobile and improvement of collision safety. However, a problem in application of a high tensile strength steel sheet is a decrease in formability due to low ductility thereof, and is an obstacle of the high tensile strength steel sheet application due to a need for changing a shape of an automotive body part of an automobile. Thus, it is required to previously determine whether a fracture (crack) is generated in a blank by press forming analysis of an automobile part. Conventionally, a forming limit diagram (FLD) is used for fracture determination of a blank (metal sheet) in the press forming analysis. Then, for example, as illustrated in FIG. 12, Non Patent Literature 1 describes measurement principles and features of the Nakajima test (FIG. 12(a)) and the Marciniak test/Marciniak punch stretching geometry (FIG. 12(b)) that are main acquisition methods of the forming limit diagram.

### Citation List

### Non Patent Literature

Non Patent Literature 1: Hiroshi Hayashi, "Determination of Forming Limit Diagram and Its International Standardization", Journal of the Japan Society for Technology of Plasticity, The Japan Society for Technology of Plasticity, May 2009, 50 (580), pp. 14-19 Summary

### Technical Problem

As illustrated in FIG. 12(c), for example, forming limit diagrams acquired by the Nakajima test and the Marciniak test do not have the same forming limit curves (FLC). Thus, it is known that there is a difference between determination results of the two in fracture determination in a press forming analysis. However, although a difference in methods of acquiring the forming limit diagram by the Nakajima test and the Marciniak test is described, any standard for using each of the forming limit diagrams properly is not described in Non Patent Literature 1.

As illustrated in FIG. 12(c), although the difference between the forming limit diagrams by the Nakajima test and the Marciniak test is as small as about 1 to 2% in terms of strain, there is a difference in generation of a fracture due to a slight difference in strain (strain/deformation) in a high tensile strength steel sheet having low ductility. Thus, in order to accurately perform the fracture determination by the forming limit diagram by using the strain (maximum principal strain and minimum principal strain) acquired by the press forming analysis, the difference in strain of about 1 to 2% cannot be ignored, and it is necessary to properly use the two forming limit diagrams acquired by the Nakajima test and the Marciniak test. However, there has been no examination so far on a standard of properly using the forming limit diagrams of the Nakajima test and the Marciniak test, and there has been a problem that the fracture determination cannot be accurately performed in the press forming analysis. Thus, it has been difficult to manufacture a press formed part under a press forming condition that can sufficiently control generation of a fracture in the press formed part.

The present invention has been made in view of the above problems, and an object thereof is to provide a fracture determination method, device, and program in a press forming analysis, which are capable of performing fracture determination by properly using the forming limit diagrams acquired by the Nakajima test and the Marciniak test. Furthermore, another object of the present invention is to provide a press formed part manufacturing method of determining a press forming condition in such a manner as to control a fracture of a blank on the basis of a result of determining presence or absence of the fracture of the blank in the press forming by the above-described method, and manufacturing a press formed part.

### Solution to Problem

According to the present invention, fracture determination method in a press forming analysis, the method determining, in the press forming analysis in a process of press forming a blank, which is modeled with shell elements, with a tool including an upper die and a lower die, a fracture in the blank in the process of the press forming on a basis of a forming limit diagram by using a computer, includes: an upper die and lower die distance measurement step of previously setting a tool position where presence or absence of the fracture of the blank is determined in the process of the press forming, and measuring a distance between each of the shell elements of the blank and each of the upper die and the lower die at the tool position set in advance; a tool distance definition step of defining, as a tool distance of each of the shell elements, a shorter one of the distances to the upper die and the lower die which distances are measured for each of the shell elements; a tool contact determination step of determining that each of the shell elements is in contact with the tool in a case where the tool distance is 1/2 or less of a sheet thickness set for each of the shell elements; and a fracture presence/absence determination step of determining the presence or absence of the fracture by using the forming limit diagram acquired by a Nakajima test for the shell element determined to be in contact with the tool, and determining the presence or absence of the fracture by using the forming limit diagram acquired by a Marciniak test for the shell element not determined to be in contact with the tool.

The blank may be modeled with solid elements instead of the shell elements, so that, in the upper die and lower die distance measurement step, a distance between each of the solid elements of the blank and each of the upper die and the lower die is measured, in the tool distance definition step, a tool distance for each of the solid elements is defined, in the tool contact determination step, it is determined that each of the solid elements is in contact with the tool in a case where the tool distance is 0 mm or less, and in the fracture presence/absence determination step, presence or absence of a fracture is determined for each of the solid elements.

According to the present invention, a fracture determination device in a press forming analysis, the device determining, in the press forming analysis in a process of press forming a blank, which is modeled with shell elements, with a tool including an upper die and a lower die, a fracture in the blank in the process of the press forming on a basis of a forming limit diagram, includes: an upper die and lower die distance measurement unit that previously sets a tool position where presence or absence of the fracture of the blank is determined in the process of the press forming and measures a distance between each of the shell elements of the blank and each of the upper die and the lower die at the tool position set in advance; a tool distance definition unit that defines, as a tool distance of each of the shell elements, a shorter one of the distances to the upper die and the lower die which distances are measured for each of the shell elements; a tool contact determination unit that determines that each of the shell elements is in contact with the tool in a case where the tool distance is 1/2 or less of a sheet thickness set for each of the shell elements; and a fracture presence/absence determination unit that determines the presence or absence of the fracture by using the forming limit diagram acquired by a Nakajima test for the shell element determined to be in contact with the tool, and determines the presence or absence of the fracture by using the forming limit diagram acquired by a Marciniak test for the shell element not determined to be in contact with the tool.

The blank may be modeled with solid elements instead of the shell elements, so that the upper die and lower die distance measurement unit measures a distance between each of the solid elements of the blank and each of the upper die and the lower die, the tool distance definition unit defines a tool distance for each of the solid elements, the tool contact determination unit determines that each of the solid elements is in contact with the tool in a case where the tool distance is 0 mm or less, and the fracture presence/absence determination unit determines presence or absence of a fracture for each of the solid elements.

According to the present invention, a fracture determination program in a press forming analysis, the program determining, in the press forming analysis in a process of press forming a blank, which is modeled with shell elements, with a tool including an upper die and a lower die, a fracture in the blank in the process of the press forming on a basis of a forming limit diagram, causes a computer to function as an upper die and lower die distance measurement unit that previously sets a tool position where presence or absence of the fracture of the blank is determined in the process of the press forming and measures a distance between each of the shell elements of the blank and each of the upper die and the lower die at the tool position set in advance; a tool distance definition unit that defines, as a tool distance of each of the shell elements, a shorter one of the distances to the upper die and the lower die which distances are measured for each of the shell elements; a tool contact determination unit that determines that each of the shell elements is in contact with the tool in a case where the tool distance is 1/2 or less of a sheet thickness set for each of the shell elements; and a fracture presence/absence determination unit that determines the presence or absence of the fracture by using the forming limit diagram acquired by a Nakajima test for the shell element determined to be in contact with the tool, and determines the presence or absence of the fracture by using the forming limit diagram acquired by a Marciniak test for the shell element not determined to be in contact with the tool.

The blank may be modeled with solid elements instead of the shell elements, so that the upper die and lower die distance measurement unit measures a distance between each of the solid elements of the blank and each of the upper die and the lower die, the tool distance definition unit defines a tool distance for each of the solid elements, the tool contact determination unit determines that each of the solid elements is in contact with the tool in a case where the tool distance is 0 mm or less, and the fracture presence/absence determination unit determines presence or absence of a fracture for each of the solid elements.

According to the present invention, a press formed part manufacturing method of manufacturing a press formed part while controlling a fracture of a blank in press forming, includes: a temporary press forming condition setting step of setting a temporary press forming condition of the press formed part; a press forming analysis step of performing a press forming analysis in a process of press forming the blank on a basis of the temporary press forming condition; a fracture generation presence/absence determination step of determining presence or absence of a fracture of the blank in the press forming analysis in the process of press forming the press formed part by the fracture determination method in the press forming analysis according to the present invention; a temporary press forming condition changing step of changing the temporary press forming condition in a case where it is determined that the fracture is generated in the blank in the fracture generation presence/absence determination step; a repetition step of repeatedly executing the temporary press forming condition changing step, the press forming analysis step, and the fracture generation presence/absence determination step until it is determined that no fracture is generated in the blank in the fracture generation presence/absence determination step; a press forming condition determination step of determining, in a case where it is determined that no fracture is generated in the blank in the fracture generation presence/absence determination step, the temporary press forming condition in that case as a press forming condition; and a press forming step of press forming the press formed part under the determined press forming condition.

Preferably, the blank of the press formed part has tensile strength of 1 GPa or more.

### Advantageous Effects of Invention

According to the present invention, in a press forming analysis in a process of press forming a blank, presence or absence of contact with a tool is determined for each element of the blank. Then, a forming limit curve acquired by the Nakajima test and a forming limit diagram acquired by the Marciniak test are properly used on the basis of the determination of the presence or absence of the contact with the tool, and presence or absence of fracture generation is determined for each element of the blank. As a result, it is possible to accurately predict whether the blank is fractured in a press forming process of an actual press formed part, and a portion where the fracture is generated. Furthermore, according to the present invention, measures of eliminating the fracture generation are taken for the portion where it is determined that the fracture is generated in the blank in the process of press forming. Then, it is determined whether the blank is fractured in the process of press forming after the measures are taken. As a result, it is also possible to determine in advance whether the measures of eliminating the fracture generation are effective. In addition, the present invention is effective in a case of performing fracture determination in press forming of a high tensile strength steel sheet having low ductility, specifically, a high tensile strength steel sheet having tensile strength of 1 GPa or more.

Furthermore, in the present invention, presence or absence of fracture generation in a press formed part is determined, and a press forming condition of controlling the fracture of the press formed part is determined on the basis of a result of the determination. This makes it possible to easily manufacture a press formed part without a crack.

### Brief Description of Drawings

FIG. 1 is a flowchart illustrating a flow of processing of a fracture determination method in a press forming analysis according to a first embodiment of the present invention.
FIG. 2 is a block diagram of a fracture determination device in the press forming analysis according to the first embodiment of the present invention.
FIG. 3 is a view illustrating a press formed part to be subjected to fracture determination in a first example and a second example.
FIG. 4 is a view illustrating a fracture generation portion in the press formed part subjected to the fracture determination in the first example and the second example.
FIG. 5 is a contour diagram illustrating a result of determining contact with an upper die and a lower die on the basis of distances to the upper die and the lower die which distances are measured for each of shell elements of a blank in the first example ((a) determination of contact with the upper die, and (b) determination of contact with the lower die).
FIG. 6 is a contour diagram illustrating a result of determining contact between each of the shell elements and a tool on the basis of a tool distance defined for each of the shell elements of the blank in the first example.
FIG. 7 is a graph illustrating, as an invention example, a result of determining presence or absence of fracture generation at a portion A and a portion B of the press formed part by properly using forming limit curves in the first example.
FIG. 8 is a contour diagram illustrating, as the invention example, a result of determining the presence or absence of the fracture generation in the press formed part by properly using the forming limit curves in the first example.
FIG. 9 is a view illustrating, as a first comparative example, a result of determining presence or absence of fracture generation in a press formed part by a forming limit diagram acquired by the Nakajima test in the first example ((a) contour diagram of the presence or absence of the fracture generation, and (b) forming limit diagram acquired by the Nakajima test).
FIG. 10 is a view illustrating, as a second comparative example, a result of determining presence or absence of fracture generation in a press formed part by a forming limit diagram acquired by the Marciniak test in the first example ((a) contour diagram of the presence or absence of the fracture generation, and (b) forming limit diagram acquired by the Marciniak test).
FIG. 11 is a view illustrating a result of determining presence or absence of fracture generation in a press forming analysis by a method of the present invention with respect to a press formed part to which measures of controlling a fracture are taken in a second example ((a) contour diagram of the presence or absence of the fracture generation, and (b) forming limit diagram).
FIG. 12 is a view illustrating methods of acquiring a forming limit diagram by the Nakajima test and the Marciniak test and an example of the forming limit diagram acquired by each of the methods ((a) Nakajima test, (b) Marciniak test, and (c) forming limit diagrams acquired by Nakajima test and the Marciniak test).
FIG. 13 is a flowchart illustrating a flow of processing of a press formed part manufacturing method according to a second embodiment of the present invention. Description of Embodiments

### <Circumstances leading to the invention>

In order to examine a standard of properly using forming limit diagrams acquired by the Nakajima test and the Marciniak test when performing fracture determination in a press forming analysis, the inventor first examined a method of acquiring the forming limit diagram by each of the Nakajima test and the Marciniak test (see Non Patent Literature 1).

In the Nakajima test, as illustrated in FIG. 12(a), bulge forming of a test piece 21 sandwiched between a die 33 and a blank holder 35 is performed with a spherical punch 31 having a spherical head, and a shape of the test piece 21 is changed to realize various strain ratios (ratio of maximum principal strain and minimum principal strain).

On the other hand, the Marciniak test is the same as the Nakajima test in a point that the shape of the test piece 21 is changed by bulge forming. However, as illustrated in FIG. 12(b), in the Marciniak test, a cylindrical flat head punch 37 is used, and a material called a carrier sheet 23 (driving sheet) is sandwiched between the flat head punch 37 and the test piece 21 when the bulge forming is performed. Thus, since the test piece 21 is not in direct contact with the flat head punch 37, friction between the flat head punch 37 and the test piece 21 in the forming process can be ignored.

As described above, from a difference in forming states of the test piece between the Nakajima test and the Marciniak test, it has been conceived that considering whether friction between a blank and a tool used for press forming can be ignored when performing fracture determination by using forming limit diagrams in a press forming analysis is effective. That is, since contact between the blank and the tool can be ignored in a region, which is not in contact with the tool, of the blank, it has been considered that the forming state is similar to an acquisition condition of the forming limit diagram by the Marciniak test. On the other hand, since the contact between the blank and the tool cannot be ignored in the region, which is in contact with the tool, of the blank, it has been considered that the forming state is similar to an acquisition condition of the forming limit diagram by the Nakajima test.

Then, on the basis of the above idea, a method of performing fracture determination of a blank in a press forming analysis using a finite element method has been intensively examined. As a result, first, presence or absence of contact with a tool is determined for each element (such as a shell element) in the blank. Then, it has been concluded that it is sufficient to use a forming limit curve acquired by the Nakajima test and a forming limit curve acquired by the Marciniak test properly on the basis of the determination of the presence or absence of the contact with the tool.

The present invention has been made on the basis of such examination results, and a first embodiment and a second embodiment of the present invention will be specifically described below.

### [First embodiment]

### <Fracture determination method in a press forming analysis>

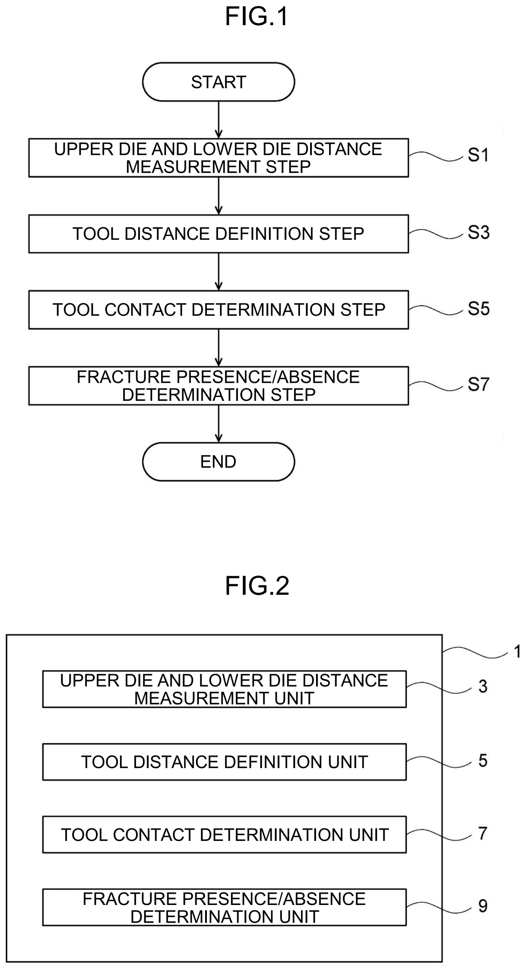

In a fracture determination method in a press forming analysis according to the first embodiment, in the press forming analysis in a process of press forming a blank by using a tool, presence or absence of a fracture in the blank in the process of press forming is determined on the basis of a forming limit diagram by utilization of a computer. In the press forming analysis, the blank is modeled with shell elements, and the tool includes an upper die and a lower die. As illustrated in FIG. 1, the fracture determination method in the press forming analysis according to the first embodiment includes an upper die and lower die distance measurement step S1, a tool distance definition step S3, a tool contact determination step S5, and a fracture presence/absence determination step S7. Each of the above steps will be described below.

### <<Upper die and lower die distance measurement step>>

The upper die and lower die distance measurement step S1 is a step of previously setting a tool position where presence or absence of a fracture of the blank is determined in the process of press forming, and measuring a distance between each of the shell elements of the blank and each of the upper die and the lower die at the tool position set in advance. The distance to each of the upper die and the lower die is the shortest distance from each of the shell elements of the blank to a surface of each of the upper die and the lower die. In addition, with respect to the tool position, a position of each of the upper die and the lower die between a start of the press forming and a forming bottom dead center position is set in advance.

### <<Tool distance definition step>>

The tool distance definition step S3 is a step of defining, as the tool distance of each of the shell elements, a shorter one of the distances to the upper die and the lower die which distances are measured for each of the shell elements.

### <<Tool contact determination step>>

The tool contact determination step S5 is a step of determining that each of the shell elements of the blank is in contact with the tool in a case where the tool distance defined in the tool distance definition step S3 is 1/2 or less of a sheet thickness set for each of the shell elements. In the tool contact determination step S5, it is determined that each of the shell elements of the blank is in contact with either the upper die or the lower die.

In a case where the blank is modeled with the shell elements, the shell elements are set at a position in the middle of the sheet thickness of the blank (position of 1/2 of the sheet thickness from a blank surface). Thus, in a case where the tool distance defined for the shell elements of the blank is 1/2 or less of the sheet thickness set for the shell elements, it is determined that the shell elements are in contact with the tool.

### <<Fracture presence/absence determination step>>

The fracture presence/absence determination step S7 is a step of determining, by using the forming limit diagram acquired by the Nakajima test, the presence or absence of the fracture with respect to the shell element determined to be in contact with the tool in the tool contact determination step S5. Furthermore, the fracture presence/absence determination step S7 is a step of determining, by using the forming limit diagram acquired by the Marciniak test, the presence or absence of the fracture with respect to the shell element that is not determined to be in contact with the tool in the tool contact determination step S5.

The forming limit diagrams acquired by the Nakajima test and the Marciniak test may be acquired by a test performed by each of the tests in advance, or forming limit diagrams already acquired for a high tensile strength steel sheet having the same steel type and strength as the blank may be acquired.

Furthermore, the determination of the presence or absence of the fracture by utilization of the forming limit diagram is performed by utilization of maximum principal strain and minimum principal strain calculated for each of the shell elements by the press forming analysis. The maximum principal strain and the minimum principal strain of each of the shell elements of the blank may be calculated by a press forming analysis performed separately, or a result calculated in advance may be acquired.

As described above, in the fracture determination method in the press forming analysis according to the first embodiment of the present invention, in the press forming analysis in the process of press forming the blank, the contact with the tool (upper die and/or lower die) is determined for each of the shell elements of the blank. Then, the forming limit diagram acquired by the Nakajima test and the forming limit diagram acquired by the Marciniak test are properly used depending on the presence or absence of the contact with the tool, and the presence or absence of the fracture generation is determined. As a result, it is possible to accurately predict presence or absence of fracture generation and a portion thereof in a press forming process of an actual press formed part. In addition, the present invention is specifically effective in a case of performing fracture determination in press forming of a high tensile strength steel sheet having low ductility.

Furthermore, by the method according to the first embodiment, it is also possible to take measures to eliminate the fracture generation in a portion where it is determined that the fracture is generated in the blank in the process of the press forming, and determine whether the blank is fractured in the process of the press forming after the measures are taken. As a result, it is also possible to determine in advance whether the measures of eliminating the fracture generation are effective. Specific effects according to the first embodiment of the present invention will be described in a first example and a second example described later.

Although the blank is modeled with the shell elements in the above description, as another aspect of the fracture determination method in the press forming analysis of the first embodiment, a blank may be modeled with solid elements instead of the shell elements.

In this case, each step in another aspect of the fracture determination method in the press forming analysis according to the first embodiment is as follows.

First, in an upper die and lower die distance measurement step, a distance to each of the upper die and the lower die is measured for each of the solid elements of the blank. The distance between the solid element and each of the upper die and the lower die is the shortest distance between a surface of the solid element included in a surface of the blank and each of the upper die and the lower die similarly to a case where modeling with the shell elements is performed.

Then, in the tool distance definition step, a tool distance is defined for each of the solid elements. The tool distance is defined as a shorter one of the distances to the upper die and the lower die which distances are measured for each of the solid elements similarly to a case where modeling is performed with the shell elements.

Subsequently, in the tool contact determination step, it is determined that each of the solid elements is in contact with the tool in a case where the tool distance is 0 mm or less. This is because the surface of the solid element is the surface of the blank in a case where the blank is modeled with the solid elements, and the solid element is in contact with the tool in a case where the tool distance defined for the solid element of the blank is 0 mm or less.

Then, in the fracture presence/absence determination step, presence or absence of a fracture is determined for each of the solid elements of the blank. Similarly to a case of the solid elements, the forming limit diagram acquired by the Nakajima test is used for the solid element determined to be in contact with the tool in the tool contact determination step in the determination of the presence or absence of the fracture. On the other hand, the forming limit diagram acquired by the Marciniak test is used for the solid element that is not determined to be in contact with the tool in the tool contact determination step.

As described above, in another aspect of the fracture determination method in the press forming analysis according to the first embodiment, the presence or absence of the contact with the tool is determined for each of the solid elements of the blank. On the basis of the determined presence or absence of the contact with the tool, the forming limit diagram acquired by the Nakajima test and the forming limit diagram acquired by the Marciniak test are properly used, and the presence or absence of the fracture generation is determined for each of the solid elements. As a result, it is possible to accurately predict the presence or absence of the fracture generation and the portion thereof in the press forming analysis using the solid elements.

### <Fracture determination device in the press forming analysis>

A fracture determination device in the press forming analysis according to the first embodiment determines, in the press forming analysis in the process of press forming the blank by using the tool, presence or absence of the fracture in the blank in the process of the press forming on the basis of the forming limit diagram. In the press forming analysis, the blank is modeled with the shell elements, and the tool includes the upper die and the lower die. As illustrated in FIG. 2, the fracture determination device 1 in the press forming analysis according to the first embodiment includes an upper die and lower die distance measurement unit 3, a tool distance definition unit 5, a tool contact determination unit 7, and a fracture presence/absence determination unit 9.

The fracture determination device 1 in the press forming analysis may include a central processing unit (CPU) of a computer (such as a PC). In this case, each of the above units functions when the CPU of the computer executes a predetermined program. Each of the above units will be described below.

### <<Upper die and lower die distance measurement unit>>

The upper die and lower die distance measurement unit 3 is to previously set the tool position where presence or absence of the fracture of the blank is determined in the process of the press forming, and measure the distance between each of the shell elements of the blank and each of the upper die and the lower die at the tool position set in advance. In the fracture determination device 1 in the press forming analysis according to the first embodiment, the upper die and lower die distance measurement unit 3 executes the upper die and lower die distance measurement step S1 of the fracture determination method in the press forming analysis according to the first embodiment described above.

### <<Tool distance definition unit>>

The tool distance definition unit 5 is to define, as the tool distance of each of the shell elements, the shorter one of the distances to the upper die and the lower die which distances are measured for each of the shell elements. In the fracture determination device 1 in the press forming analysis according to the first embodiment, the tool distance definition unit 5 executes the tool distance definition step S3 of the fracture determination method in the press forming analysis according to the first embodiment described above.

### <<Tool contact determination unit>>

The tool contact determination unit 7 determines that each of the shell elements is in contact with the tool in a case where the tool distance is 1/2 or less of the sheet thickness set for each of the shell elements. In the fracture determination device 1 in the press forming analysis according to the first embodiment, the tool contact determination unit 7 executes the tool contact determination step S5 of the fracture determination method in the press forming analysis according to the first embodiment described above.

### <<Fracture presence/absence determination unit>>

The fracture presence/absence determination unit 9 is to determine presence or absence of the fracture, with respect to the shell element determined to be in contact with the tool by the tool contact determination unit 7, by using the forming limit diagram acquired by the Nakajima test. Furthermore, the fracture presence/absence determination unit 9 is to determine presence or absence of the fracture, with respect to the shell element not determined to be in contact with the tool by the tool contact determination unit 7, by using the forming limit diagram acquired by the Marciniak test. In the fracture determination device 1 in the press forming analysis according to the first embodiment, the fracture presence/absence determination unit 9 performs the fracture presence/absence determination step S7 of the fracture determination method in the press forming analysis according to the first embodiment described above.

As the forming limit diagram acquired by each of the Nakajima test and the Marciniak test, a forming limit diagram already acquired for a high tensile strength steel sheet of the same steel type and strength as the blank to be formed is acquired in advance.

Furthermore, the determination of the presence or absence of the fracture by utilization of the forming limit diagram is performed by utilization of maximum principal strain and minimum principal strain calculated for each of the shell elements by the press forming analysis. The maximum principal strain and the minimum principal strain of each of the shell elements of the blank may be acquired as a calculated result of a press forming analysis performed in advance.

However, the fracture determination device 1 in the press forming analysis according to the first embodiment may include a press forming analysis unit that performs the press forming analysis. In this case, before presence or absence of the fracture is determined for each of the shell elements of the blank by the fracture presence/absence determination unit 9, a press forming analysis may be executed by the press forming analysis unit, and the maximum principal strain and the minimum principal strain may be calculated for each of the shell elements of the blank.

### <Fracture determination program in the press forming analysis>

The first embodiment of the present invention can be configured as a fracture determination program in the press forming analysis which program causes each unit of the fracture determination device 1 in the press forming analysis which device includes the computer to function.

That is, the fracture determination program in the press forming analysis according to the first embodiment determines, in the press forming analysis in the process of press forming the blank by using the tool, presence or absence of the fracture in the blank in the process of press forming on the basis of the forming limit diagram. In the press forming analysis, the blank is modeled with the shell elements, and the tool includes the upper die and the lower die. Then, as illustrated in FIG. 2, the fracture determination program in the press forming analysis according to the first embodiment causes the computer to function as the upper die and lower die distance measurement unit 3, the tool distance definition unit 5, the tool contact determination unit 7, and the fracture presence/absence determination unit 9.

As described above, also in the fracture determination device in the press forming analysis and the fracture determination program in the press forming analysis according to the first embodiment of the present invention, presence or absence of the contact with the tool is determined for each of the shell elements of the blank. On the basis of the determined presence or absence of the contact with the tool, the forming limit diagram acquired by the Nakajima test and the forming limit diagram acquired by the Marciniak test are properly used, and presence or absence of the fracture generation in the blank is determined. As a result, it is possible to accurately predict presence or absence of fracture generation and a portion thereof in a press forming process of an actual press formed part.

Furthermore, by the first embodiment, it is also possible to take measures of eliminating the fracture generation in the portion where it is determined that the fracture is generated in the blank in the process of press forming, and determine whether the blank is fractured in the process of press forming after the measures are taken. As a result, it is also possible to determine in advance whether the measures of eliminating the fracture generation are effective.

As another aspect of the fracture determination device in the press forming analysis and the fracture determination program in the press forming analysis according to the first embodiment of the present invention, there may be a case where a blank is modeled with the solid elements instead of the shell elements.

In this case, the upper die and lower die distance measurement unit measures a distance between each of the solid elements of the blank and each of the upper die and the lower die. In addition, the tool distance definition unit defines a tool distance for each of the solid elements. Then, the tool contact determination unit determines that each of the solid elements is in contact with the tool in a case where the tool distance is 0 mm or less. This is because the surface of the solid element is the surface of the blank in a case where the blank is modeled with the solid elements, and the solid element is in contact with the tool in a case where the tool distance defined for the solid element of the blank is 0 mm or less. Furthermore, the fracture presence/absence determination unit determines presence or absence of the fracture with respect to each of the solid elements of the blank.

As described above, also in another aspect of the fracture determination device in the press forming analysis and the fracture determination program in the press forming analysis according to the first embodiment of the present invention, presence or absence of the contact with the tool is determined for each of the solid elements of the blank. Then, on the basis of the determined presence or absence of the contact with the tool, the forming limit curve measured by the Nakajima test and the forming limit curve measured by the Marciniak test are properly used to determine presence or absence of the fracture generation in the blank. As a result, it is possible to accurately predict presence or absence of the fracture generation in the press forming process of the actual press formed part.

### [Second embodiment]

### <Press formed part manufacturing method>

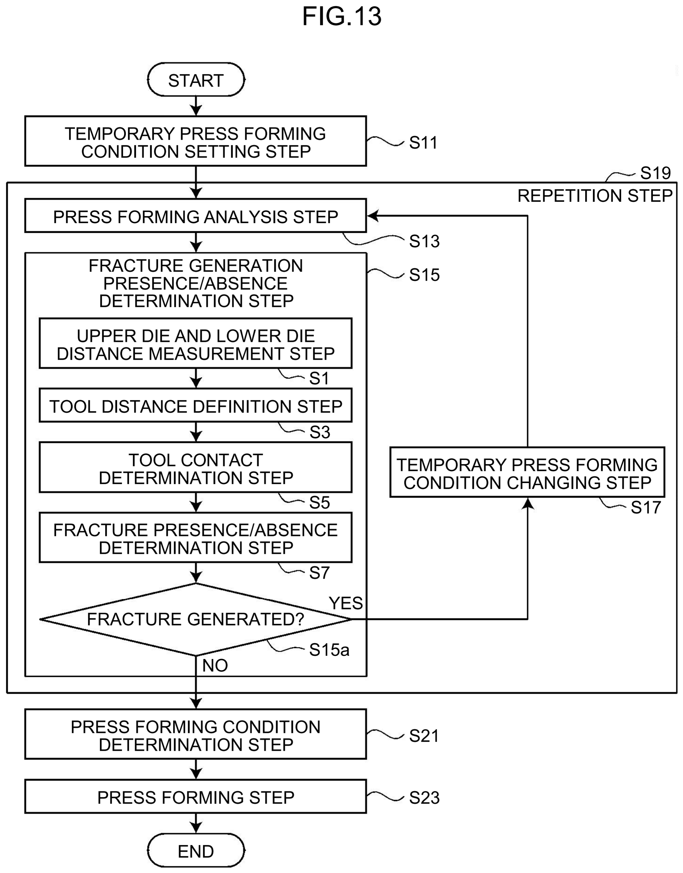

A press formed part manufacturing method according to the second embodiment of the present invention manufactures a press formed part while controlling a fracture of a blank in press forming. As illustrated in FIG. 13, the press formed part manufacturing method according to the second embodiment includes a temporary press forming condition setting step S11, a press forming analysis step S13, a fracture generation presence/absence determination step S15, a temporary press forming condition changing step S17, and a repetition step S19. The press formed part manufacturing method according to the second embodiment further includes a press forming condition determination step S21 and a press forming step S23.

### <<Temporary press forming condition setting step>>

The temporary press forming condition setting step S11 is a step of setting a temporary press forming condition for a press formed part.

As the temporary press forming condition set in the temporary press forming condition setting step S11, in a case where a press formed part having a bent portion acquired by bending of a steel sheet is an object, there is a bending radius of the bent portion (radius of punch shoulder part). In addition, there are a clearance between a punch and a die/die for press, a sheet thickness of the steel sheet, and the like. Furthermore, in a case of a draw-bending method (stretch bending, and bending and stretching), there are a radius of a die shoulder part, a clearance of a side wall portion, a blank holder pressure, and the like. In addition, a shape of a tool used for press forming is also included as the press forming condition.

### <<Press forming analysis step>>

The press forming analysis step S13 is a step of performing a press forming analysis in a process of press forming a blank, which is modeled with shell elements, by using a tool including an upper die and a lower die on the basis of the temporary press forming condition set in the temporary press forming condition setting step S11. The press forming analysis in the press forming analysis step S13 is performed by utilization of a computer.

### <<Fracture generation presence/absence determination step>>

The fracture generation presence/absence determination step S15 is performed on a result of the press forming analysis performed in the press forming analysis step S13, and determines presence or absence of a fracture of the blank in the press forming analysis in the process of press forming the press formed part. The presence or absence of the fracture of the blank is determined for each of the shell elements of the blank by performance of the above-described fracture presence/absence determination method in the press forming analysis according to the present invention. Furthermore, the fracture generation presence/absence determination step S15 predicts a portion where the fracture is generated in the blank on the basis of a result of the determination of the presence or absence of the fracture with respect to each of the shell elements of the blank.

In the second embodiment, as illustrated in FIG. 13, in the fracture generation presence/absence determination step S15, an upper die and lower die distance measurement step S1, a tool distance definition step S3, a tool contact determination step S5, and a fracture presence/absence determination step S7 are sequentially performed.

The upper die and lower die distance measurement step S1, the tool distance definition step S3, the tool contact determination step S5, and the fracture presence/absence determination step S7 are the similar to those in the first embodiment described above.
Furthermore, the fracture generation presence/absence determination step S15 determines presence or absence of a fracture in a press formed part, which is press-formed under the temporary press forming condition, on the basis of presence or absence of a portion where it is determined that the fracture is generated in the blank in the fracture presence/absence determination step S7 (S15a).

Specifically, in the fracture presence/absence determination step S7, presence or absence of the fracture is determined with respect to each of the shell elements of the blank modeled with the shell elements. Then, in a case where there is the shell element for which it is determined that the fracture is generated, it is determined that there is the fracture generation in the press formed part (S15a). On the other hand, in a case where there is no shell element for which it is determined that the fracture is generated, it is determined that there is no fracture generation in the press formed part (S15a).

### <<Temporary press forming condition changing step>>

The temporary press forming condition changing step S17 is a step of changing the temporary press forming condition in a case where it is determined that the fracture is generated in the press formed part in the fracture generation presence/absence determination step S15.

The temporary press forming condition may be changed in accordance with a result of the determination of presence or absence of the contact between the tool and the portion where the fracture is determined to be generated. In a case where it is determined in the tool contact determination step S5 that there is the contact between the tool and the portion where the fracture is determined to be generated, the temporary press forming condition is changed in such a manner that it is determined that there is no fracture in the portion on the basis of the forming limit diagram acquired by the Nakajima test. Similarly, in a case where it is determined in the tool contact determination step S5 that there is no contact between the tool and the portion where the fracture is determined to be generated, the temporary press forming condition is changed in such a manner that it is determined that there is no fracture in the portion on the basis of the forming limit diagram acquired by the Marciniak test.

For the determination that the fracture is not generated, the temporary press forming condition may be changed in such a manner that a maximum principal strain and/or a minimum principal strain at the portion where the fracture is determined to be generated are/is adjusted. In the adjustment of the maximum principal strain and/or the minimum principal strain, for example, in a case where the portion where the fracture is determined to be generated is the bent portion formed by bending, a shape of the tool may be changed and the bending radius of the bent portion is increased.

### <<Repetition step>>

In the repetition step S19, the press forming analysis step S13, the fracture generation presence/absence determination step S15, and the temporary press forming condition changing step S17 are repeatedly executed under the changed temporary press forming condition. This repetition is executed until it is determined that there is no fracture generation in the press formed part in the fracture generation presence/absence determination step S15. Thus, in a case where it is not determined that there is no fracture generation in the press formed part when the temporary press forming condition is changed only once, the temporary press forming condition changing step S17 is also repeated.

### <<Press forming condition determination step>>

The press forming condition determination step S21 is a step of determining, in a case where it is determined that there is no fracture generation in the press formed part in the fracture generation presence/absence determination step S15, the temporary press forming condition of that case as the press forming condition of the press formed part.

### <<Press forming step>>

The press forming step S23 is a step of press forming the blank into the press formed part under the press forming condition determined in the press forming condition determination step S21.

As described above, in the press formed part manufacturing method according to the second embodiment, presence or absence of the fracture generation in the press formed part is determined on the basis of the fracture determination method in the press forming analysis according to the present invention, and the press forming condition of controlling the fracture of the press formed part is determined on the basis of the determination result. This makes it possible to easily manufacture the press formed part without a crack.

In the present invention, an object of the fracture determination refers to the blank in a deformed state from the start of forming to the forming bottom dead center, and includes the press formed part deformed into a forming bottom dead center shape.

In the present invention, it is not necessary to perform the fracture determination on all the elements (shell elements or solid elements) of the blank. For example, the fracture determination may be performed on an element of a portion in the blank which portion corresponds to a portion where there is a high concern that the fracture is generated in the press formed part to be formed.

Furthermore, a blank to be an object in the present invention may be a hot rolled steel sheet, a cold rolled steel sheet, a galvanized steel sheet in which surface treatment (electro-galvanizing, hot-dip galvanizing, organic coating treatment, or the like) is performed on a steel sheet, a stainless steel sheet (SUS), or a metal sheet of various kinds of metal such as aluminum (Al) or magnesium (Mg).

In the fracture determination method in the press forming analysis and the press formed part manufacturing method according to the present invention, the high tensile strength steel sheet having low ductility, specifically, the high tensile strength steel sheet having the tensile strength of 1 GPa or more can be preferably applied as the blank. As described above, in the present invention, in a case where the high tensile strength steel sheet having low ductility is used as the blank and a slight difference in strain is generated, the forming limit diagrams acquired by the Nakajima test and the Marciniak test are used properly and the fracture determination is accurately performed. However, there is no problem in practical use even when the present invention is applied to a case where strain/deformation is not subtle even when the high tensile strength steel sheet is used or a case where a steel sheet having high ductility is used.

### [First example]

An analysis for verifying an effect of the fracture determination method in the press forming analysis according to the present invention has been performed, and will be described below.

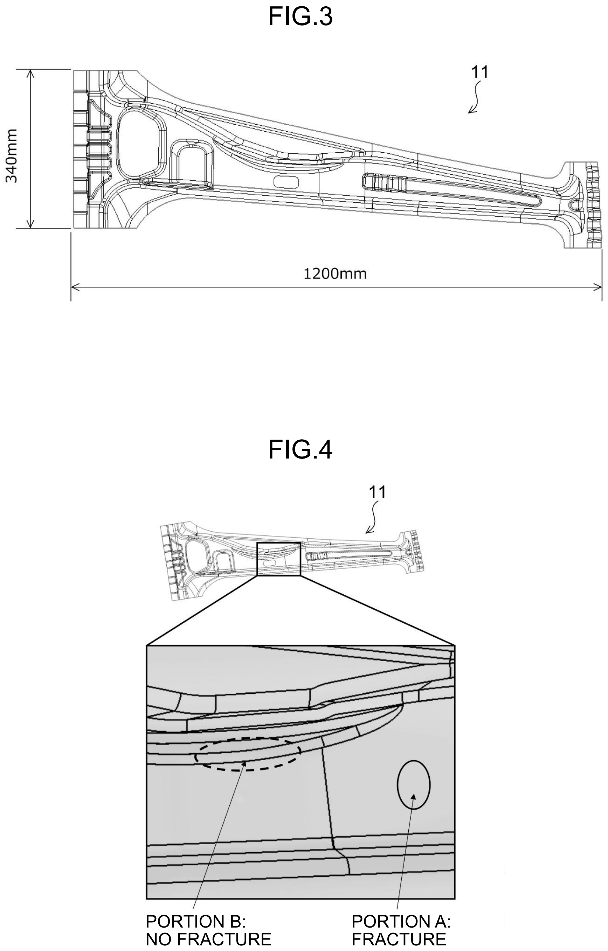

In the first example, a press forming analysis of a press formed part 11 illustrated in FIG. 3 was an object. The press formed part 11 was a center pillar that was a body frame part of an automobile, and a blank used for press forming was a cold rolled 1470 MPa-class high tensile strength steel sheet having a sheet thickness of 1.6 mm.

Furthermore, the press formed part 11 was actually press-formed, and presence or absence of a fracture (crack) generation and a portion of the generation were confirmed. As a result, as illustrated in FIG. 4, it was confirmed that although both a portion A and a portion B were in a plane strain state, a fracture was not generated in a portion B having small maximum principal strain while the fracture was generated in the portion A due to large maximum principal strain.

Then, a press forming analysis in a process of press forming a blank 13 modeled with shell elements into the press formed part 11 was performed, and strain (minimum principal strain and maximum principal strain) in the press forming process was acquired for each of the shell elements of the blank.

Then, presence or absence of a fracture in a portion A and a portion B of the blank which portions correspond to the portion A and the portion B of the press formed part 11 was determined according to the method according to the first embodiment of the present invention described above. First, a tool position in a process of press forming at which position presence or absence of the fracture was determined was set. In the present example, the fracture determination was performed when the tool was located at a position of a bottom dead center.

Then, a distance between each of the shell elements of the blank 13 and each of an upper die and a lower die at a time point at which the upper die and the lower die were located at the set tool position was measured.

Then, a shorter one of the distances to the upper die and the lower die which distances were measured for each of the shells of the blank 13 was defined as a tool distance.

Subsequently, the shell element in which the defined tool distance was 1/2 or less of a sheet thickness set for each of the shell elements (= 1.6 mm) was determined to be in contact with the tool (upper die and/or lower die).

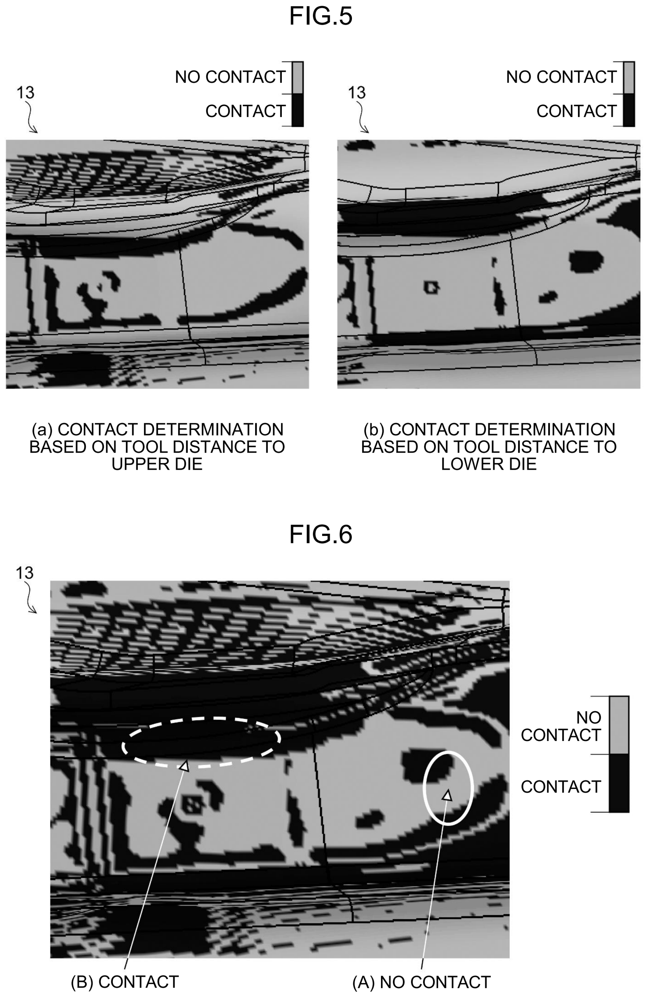

In FIG. 5, a result of determining the presence or absence of the contact between each of the shell elements and the upper die or the lower die on the basis of the distance to each of the upper die and the lower die which distance was measured for each of the shell elements of the blank 13 is illustrated. The result illustrated in FIG. 5 indicates that the shell element in which the distance to the upper die or the lower die was equal to or less than 1/2 of the sheet thickness set for each of the shell elements (= 1.6 mm) was determined to be in contact with the tool, and the shell element in which the distance to the upper die or the lower die was equal to or more than the sheet thickness was determined not to be in contact with the tool.

A result of determining the presence or absence of the contact between each of the shell elements and the tool on the basis of the tool distance defined for each of the shell elements is illustrated in FIG. 6. As illustrated in FIG. 6, each of the shell elements of the blank 13 was determined to be in contact with the tool for the shell element in contact with the upper die or lower die illustrated in FIG. 5.

Then, as an invention example, on the basis of a determination result of the presence or absence of the contact with the tool, presence or absence of a fracture was determined by proper utilization of a forming limit diagram acquired by Nakajima and a forming limit diagram acquired by the Marciniak test. That is, for the shell element of the blank 13 which shell element was determined to be in contact with the tool, the presence or absence of the fracture was determined on the basis of the forming limit diagram acquired by the Nakajima test. On the other hand, for the shell element of the blank 13 which shell element was not determined to be in contact with the tool, the presence or absence of the fracture was determined on the basis of the forming limit diagram acquired by the Marciniak test.

Furthermore, for comparison, presence or absence of a fracture was determined without determination of presence or absence of contact with the tool for each of the portion A and the portion B in the blank 13 which portions correspond to the portion A and the portion B of the press formed part 11. The forming limit diagram acquired by the Nakajima test was used to determine presence or absence of the fracture in a first comparative example, and the forming limit diagram acquired by the Marciniak test was used to determine presence or absence of the fracture in a second comparative example.

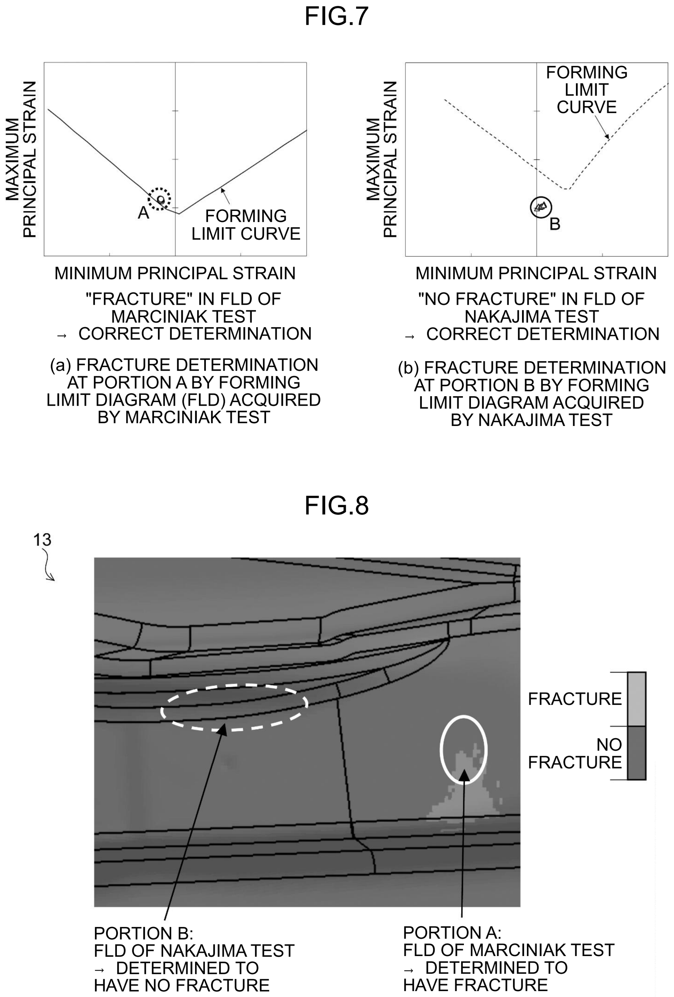

A determination result of the presence or absence of the fracture of the blank in the invention example is illustrated in FIG. 7. FIG. 7(a) is a view illustrating a result of determining the presence or absence of the fracture at the portion A by plotting the minimum principal strain and the maximum principal strain at the portion A of the blank 13 on the forming limit diagram acquired by the Marciniak test. FIG. 7(b) is a view illustrating a result of determining the presence or absence of the fracture at the portion B by plotting a strain ratio (minimum principal strain and maximum principal strain) at the portion B in the blank 13 on the forming limit diagram acquired by the Nakajima test.

Furthermore, as the invention example, a contour diagram of a result of determining the presence or absence of the fracture with respect to each of the shell elements of the blank 13 by properly using the forming limit diagrams of the Nakajima test and the Marciniak test on the basis of the determination of the contact with the tool, which determination is illustrated in FIG. 6, is illustrated in FIG. 8.

With respect to the portion A, since it was determined that there was no contact with the tool as illustrated in FIG. 6 described above, the presence or absence of the fracture was determined on the basis of the forming limit diagram of the Marciniak test as illustrated in FIG. 7(a). As a result, the maximum principal strain at the portion A of the blank 13 was a value larger than the maximum principal strain corresponding to the minimum principal strain at the portion A in the forming limit diagram of the Marciniak test. Thus, it was determined that there was the fracture at the portion A as illustrated in FIG. 7(a) and FIG. 8.

On the other hand, with respect to the portion B, since it was determined that there was the contact with the tool as illustrated in FIG. 6 described above, the presence or absence of the fracture was determined on the basis of the forming limit diagram of the Nakajima test as illustrated in FIG. 7(b). As a result, the maximum principal strain at the portion B of the blank 13 was a value smaller than the maximum principal strain corresponding to the minimum principal strain at the portion B in the forming limit diagram of the Nakajima test. Thus, at the portion B, it was determined that there was no fracture as illustrated in FIG. 7(b) and FIG. 8.

Then, results of the determination of the fracture with respect to the portion A and the portion B illustrated in FIG. 7 and FIG. 8 matched the presence or absence of the fracture in the actual press formed part 11 illustrated in FIG. 4. Thus, it was shown that the method of the present invention can correctly determine the presence or absence of the fracture of the blank 13 in the press forming analysis of the press formed part 11.

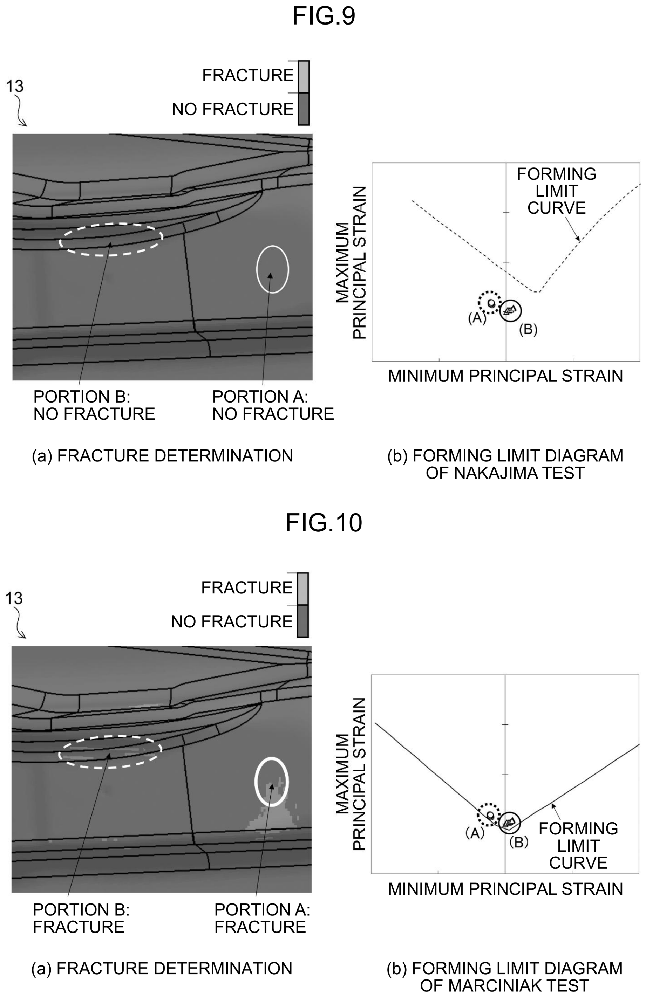

A result of the determination of the presence or absence of the fracture of the blank in the first comparative example is illustrated in FIG. 9. Here, FIG. 9(a) is a view illustrating a result of determining the presence or absence of the fracture in the forming limit diagram acquired by the Nakajima test for each of the shell elements of the blank 13. In addition, FIG. 9(b) is a view illustrating a result acquired by plotting of the minimum principal strain and the maximum principal strain at the portion A and the portion B on the forming limit diagram acquired by the Nakajima test.

As illustrated in FIG. 9(b), the maximum principal strain at the portion A and the portion B of the blank 13 was a value smaller than the maximum principal strain corresponding to the minimum principal strain at each portion in the forming limit diagram of the Nakajima test. Thus, in a case where the presence or absence of the fracture was determined by the forming limit diagram of the Nakajima test, it was determined that there was no fracture at each of the portion A and the portion B as illustrated in FIG. 9(a).

A result of the determination of the presence or absence of the fracture of the blank in the second comparative example is illustrated in FIG. 10. FIG. 10(a) is a view illustrating a result of determining, with respect to each of the shell elements of the blank 13, the presence or absence of the fracture according to the forming limit diagram acquired by the Marciniak test. In addition, FIG. 10(b) is view illustrating a result acquired by plotting of the minimum principal strain and the maximum principal strain at the portion A and the portion B on the forming limit diagram acquired by the Marciniak test.

As illustrated in FIG. 10(b), the maximum principal strain at the portion A and the portion B of the blank 13 was a value larger than the maximum principal strain corresponding to the minimum principal strain of each portion in the forming limit diagram of the Marciniak test. Thus, in a case where the presence or absence of the fracture was determined by the forming limit diagram of the Marciniak test, it was determined that there was the fracture at each of the portion A and the portion B as illustrated in FIG. 10(a).

As described above, a result of determining the presence or absence of the fracture by either the forming limit diagram acquired by the Nakajima test or the forming limit diagram acquired by the Marciniak test was not consistent with the result of the presence or absence of the fracture at the portion A and the portion B of the actual press formed part 11 illustrated in FIG. 4.

As described above, according to the present invention, it has been demonstrated that it is possible to accurately determine the presence or absence of the fracture in the blank by properly using the forming limit diagram to be a reference of determining the presence or absence of the fracture on the basis of the contact between the blank and the tool in the press forming analysis.

### [Second example]

In the second example, measures to eliminate the fracture at the portion A of the press formed part 11 determined to have the fracture in the first example were taken, and the fracture of the blank 13 corresponding to the portion A was determined by the fracture determination method in the press forming analysis according to the present invention. Furthermore, in the second example, presence or absence of the fracture generation in the actually press-formed press formed part 11 was verified.

As measures to eliminate the fracture at the portion A of the press formed part 11, a material inflow in the press forming process to the portion corresponding to the portion A of the press formed part 11 in the blank was promoted. Thus, a shape of an actual tool was adjusted in such a manner that the minimum principal strain at the portion A was induced to a compression side (negative side). As a result of adjusting the shape of the tool and actually press forming the press formed part 11, the fracture was not generated at the portion A of the press formed part 11, and the fracture could be eliminated.

A result of determining the fracture of the blank 13 in the press forming analysis of the press formed part 11 by the method according to the present invention by adjusting the shape of the tool and performing the press forming analysis is illustrated in FIG. 11(a). In addition, a result of plotting, on the forming limit diagram, the minimum principal strain and the maximum principal strain before adjustment of the tool shape (plot A in FIG. 11(b)) and the minimum principal strain and the maximum principal strain after the adjustment (plot A' in FIG. 11(b)) is illustrated in FIG. 11(b).

As illustrated in FIG. 11(b), since the maximum principal strain before the adjustment of the tool shape (plot A in the drawing) was a value larger than the maximum principal strain on the forming limit curve corresponding to the minimum principal strain at the portion A, it was determined that there was the fracture.

On the other hand, since the maximum principal strain after the adjustment of the tool shape (plot A' in the drawing) was a value smaller than the maximum principal strain on the forming limit curve corresponding to the minimum principal strain at the portion A, it was determined that the fracture was not generated.

As described above, also in the press forming analysis of the press formed part in which measures were taken to eliminate the fracture of the blank in the press forming process, similarly to the press formed part actually press-formed with the fracture controlling measures being taken, a result that the fracture generation can be controlled was acquired.

From the above results, by the method according to the present invention, measures to eliminate the fracture generation are taken at the portion where it is determined that the fracture is generated in the blank in the process of press forming, and it is determined whether the blank is fractured by the press forming analysis in the process of press forming after the measures are taken. As a result, it has been demonstrated that it is also possible to determine in advance whether the measures of eliminating the fracture generation is effective.

### Industrial Applicability

According to the present invention, it is possible to provide a fracture determination method, device, and program in a press forming analysis, which are capable of properly using forming limit diagrams acquired by the Nakajima test and the Marciniak test and performing fracture determination. Furthermore, according to the present invention, it is possible to provide a press formed part manufacturing method of determining a press forming condition in such a manner as to control a fracture of a blank on the basis of a result of determining presence or absence of the fracture of the blank in press forming by the above-described method, and manufacturing a press formed part.

### Reference Signs List

- 1: FRACTURE DETERMINATION DEVICE IN PRESS FORMING ANALYSIS
- 3: UPPER DIE AND LOWER DIE DISTANCE MEASUREMENT UNIT
- 5: TOOL DISTANCE DEFINITION UNIT
- 7: TOOL CONTACT DETERMINATION UNIT
- 9: FRACTURE PRESENCE/ABSENCE DETERMINATION UNIT
- 11: PRESS FORMED PART
- 13: BLANK
- 21: TEST PIECE
- 23: CARRIER SHEET
- 31: SPHERICAL PUNCH
- 33: DIE
- 35: BLANK HOLDER
- 37: FLAT HEAD PUNCH

## Claims

1. A fracture determination method in a press forming analysis, the method determining, in the press forming analysis in a process of press forming a blank, which is modeled with shell elements, with a tool including an upper die and a lower die, a fracture in the blank in the process of the press forming on a basis of a forming limit diagram by using a computer, and the method comprising:
an upper die and lower die distance measurement step of previously setting a tool position where presence or absence of the fracture of the blank is determined in the process of the press forming, and measuring a distance between each of the shell elements of the blank and each of the upper die and the lower die at the tool position set in advance;
a tool distance definition step of defining, as a tool distance of each of the shell elements, a shorter one of the distances to the upper die and the lower die which distances are measured for each of the shell elements;
a tool contact determination step of determining that each of the shell elements is in contact with the tool in a case where the tool distance is 1/2 or less of a sheet thickness set for each of the shell elements; and
a fracture presence/absence determination step of determining the presence or absence of the fracture by using the forming limit diagram acquired by a Nakajima test for the shell element determined to be in contact with the tool, and determining the presence or absence of the fracture by using the forming limit diagram acquired by a Marciniak test for the shell element not determined to be in contact with the tool.

2. The fracture determination method in the press forming analysis according to claim 1, wherein the blank is modeled with solid elements instead of the shell elements,
in the upper die and lower die distance measurement step, a distance between each of the solid elements of the blank and each of the upper die and the lower die is measured,
in the tool distance definition step, a tool distance for each of the solid elements is defined,
in the tool contact determination step, it is determined that each of the solid elements is in contact with the tool in a case where the tool distance is 0 mm or less, and
in the fracture presence/absence determination step, presence or absence of a fracture is determined for each of the solid elements.

3. A fracture determination device in a press forming analysis, the device determining, in the press forming analysis in a process of press forming a blank, which is modeled with shell elements, with a tool including an upper die and a lower die, a fracture in the blank in the process of the press forming on a basis of a forming limit diagram, and the device comprising:
an upper die and lower die distance measurement unit that previously sets a tool position where presence or absence of the fracture of the blank is determined in the process of the press forming and measures a distance between each of the shell elements of the blank and each of the upper die and the lower die at the tool position set in advance;
a tool distance definition unit that defines, as a tool distance of each of the shell elements, a shorter one of the distances to the upper die and the lower die which distances are measured for each of the shell elements;
a tool contact determination unit that determines that each of the shell elements is in contact with the tool in a case where the tool distance is 1/2 or less of a sheet thickness set for each of the shell elements; and
a fracture presence/absence determination unit that determines the presence or absence of the fracture by using the forming limit diagram acquired by a Nakajima test for the shell element determined to be in contact with the tool, and determines the presence or absence of the fracture by using the forming limit diagram acquired by a Marciniak test for the shell element not determined to be in contact with the tool.

4. The fracture determination device in the press forming analysis according to claim 3, wherein the blank is modeled with solid elements instead of the shell elements,
the upper die and lower die distance measurement unit measures a distance between each of the solid elements of the blank and each of the upper die and the lower die,
the tool distance definition unit defines a tool distance for each of the solid elements,
the tool contact determination unit determines that each of the solid elements is in contact with the tool in a case where the tool distance is 0 mm or less, and
the fracture presence/absence determination unit determines presence or absence of a fracture for each of the solid elements.

5. A fracture determination program in a press forming analysis, the program determining, in the press forming analysis in a process of press forming a blank, which is modeled with shell elements, with a tool including an upper die and a lower die, a fracture in the blank in the process of the press forming on a basis of a forming limit diagram, and the program causing
a computer to function as
an upper die and lower die distance measurement unit that previously sets a tool position where presence or absence of the fracture of the blank is determined in the process of the press forming and measures a distance between each of the shell elements of the blank and each of the upper die and the lower die at the tool position set in advance;
a tool distance definition unit that defines, as a tool distance of each of the shell elements, a shorter one of the distances to the upper die and the lower die which distances are measured for each of the shell elements;
a tool contact determination unit that determines that each of the shell elements is in contact with the tool in a case where the tool distance is 1/2 or less of a sheet thickness set for each of the shell elements; and
a fracture presence/absence determination unit that determines the presence or absence of the fracture by using the forming limit diagram acquired by a Nakajima test for the shell element determined to be in contact with the tool, and determines the presence or absence of the fracture by using the forming limit diagram acquired by a Marciniak test for the shell element not determined to be in contact with the tool.

6. The fracture determination program in the press forming analysis according to claim 5, wherein the blank is modeled with solid elements instead of the shell elements,
the upper die and lower die distance measurement unit measures a distance between each of the solid elements of the blank and each of the upper die and the lower die,
the tool distance definition unit defines a tool distance for each of the solid elements,
the tool contact determination unit determines that each of the solid elements is in contact with the tool in a case where the tool distance is 0 mm or less, and
the fracture presence/absence determination unit determines presence or absence of a fracture for each of the solid elements.

7. A press formed part manufacturing method of manufacturing a press formed part while controlling a fracture of a blank in press forming, the method comprising:
a temporary press forming condition setting step of setting a temporary press forming condition of the press formed part;
a press forming analysis step of performing a press forming analysis in a process of press forming the blank on a basis of the temporary press forming condition;
a fracture generation presence/absence determination step of determining presence or absence of a fracture of the blank in the press forming analysis in the process of press forming the press formed part by the fracture determination method in the press forming analysis according to claim 1 or 2;
a temporary press forming condition changing step of changing the temporary press forming condition in a case where it is determined that the fracture is generated in the blank in the fracture generation presence/absence determination step;
a repetition step of repeatedly executing the temporary press forming condition changing step, the press forming analysis step, and the fracture generation presence/absence determination step until it is determined that no fracture is generated in the blank in the fracture generation presence/absence determination step;
a press forming condition determination step of determining, in a case where it is determined that no fracture is generated in the blank in the fracture generation presence/absence determination step, the temporary press forming condition in that case as a press forming condition; and
a press forming step of press forming the press formed part under the determined press forming condition.

8. The press formed part manufacturing method according to claim 7, wherein the blank of the press formed part has tensile strength of 1 GPa or more.
